# EUROPÄISCHE PATENTSCHRIFT

(11) **EP 2 984 196 B1**
(45) Veröffentlichungstag und Bekanntmachung des Hinweises auf die Patenterteilung: **31.07.2019**
(21) Anmeldenummer: 14726319.8
(22) Anmeldetag: 08.04.2014
(51) Int. Cl.: C22C 23/00, C22C 23/06, B23K 35/28, B23K 35/02

(54) **ALUMINIUMFREIE MAGNESIUMLEGIERUNG UND VERWENDUNG DAVON**
ALUMINUM-FREE MAGNESIUM ALLOY AND USE THEREOF
ALLIAGE DE MAGNÉSIUM EXEMPT D'ALUMINIUM ET SON UTILISATION

(30) Priorität: 10.04.2013 DE 102013006170
(43) Veröffentlichungstag der Anmeldung: 17.02.2016
(73) Patentinhaber: Bruhnke, Ulrich, 71139 Ehningen (DE)
(72) Erfinder: BRUHNKE, Ulrich, 71139 Ehningen (DE); LINDNER, Karl-Heinz, 45481 Mühlheim (DE); ANDERSECK, Ralf, 84104 Rudelzhausen (DE)
(74) Vertreter: Helge, Reiner
(86) Internationale Anmeldenummer: PCT/DE2014/000180
(87) Internationale Veröffentlichungsnummer: WO 2014/166475

(56) Entgegenhaltungen:
- CN-B- 101 985 712
- DE-A1-102009 038 449
- GB-A- 513 627
- Anonymous: "Prozesskette - Rohmaterial", TechMag AG , 16. März 2013 (2013-03-16), XP002727060, Gefunden im Internet: URL:https://web.archive.org/web/2013031600 2413/http://www.techmag-ag.com/prozesskett e/rohmaterial [gefunden am 2014-07-11]
- SMOLA B ET AL: "Structural aspects of high performance Mg alloy design", MATERIALS SCIENCE AND ENGINEERING A: STRUCTURAL MATERIALS:PROPERTIES, MICROSTRUCTURE & PROCESSING, Bd. A324, 1. Januar 2002 (2002-01-01), Seiten 113-117, XP002382002, LAUSANNE, CH ISSN: 0921-5093, DOI: 10.1016/S0921-5093(01)01291-6
- I. STULÍKOVÁ ET AL: "Mechanical properties and creep of Mg - rare earth - Sc - Mn squeeze cast alloys", MATERIALWISSENSCHAFT UND WERKSTOFFTECHNIK, Bd. 34, Nr. 1, 1. Januar 2003 (2003-01-01) , Seiten 102-108, XP055128392, ISSN: 0933-5137, DOI: 10.1002/mawe.200390000
- R. SCHMID-FETZER ET AL: "Focused Development of Magnesium Alloys Using the Calphad Approach", ADVANCED ENGINEERING MATERIALS, Bd. 3, Nr. 12, 1. Dezember 2001 (2001-12-01), Seiten 947-961, XP055128306, ISSN: 1438-1656, DOI: 10.1002/1527-2648(200112)3:12<947::AID-ADE M947>3.0.CO;2-P

## Beschreibung

Die Erfindung betrifft eine aluminiumfreie Magnesiumlegierung sowie die Verwendung zur Herstellung stranggepreßter, stranggegossener oder druckgegossener Halbzeuge bzw. Bauteile sowie von Blechen.

Magnesiumlegierungen sind Leichtbauwerkstoffe, die im Vergleich zu den Legierungen anderer Metalle ein sehr niedriges Gewicht haben und finden dort Anwendung, wo ein niedriges Gewicht eine bedeutsame Rolle spielt, insbesondere in der Kraftfahrzeugtechnik, im Motorenbau und in der Luft- und Raumfahrttechnik.

Bei sehr guten Festigkeitseigenschaften und einem geringen spezifischen Gewicht sind Magnesiumlegierungen als metallische Konstruktionsmaterialien vor allem für den Fahrzeug- und Flugzeugbau von hohem Interesse.

Gerade im Fahrzeugbau wird eine Reduzierung des Gewichts benötigt, da aufgrund steigender Komfort- und Sicherheitsstandards zusätzliche Elemente eingebaut werden. Auch ist der Leichtbau für die Konstruktion von energiesparenden Fahrzeugen von Bedeutung. Bei der Verarbeitung von Magnesiumwerkstoffen kommt den Verfahren - Urformen durch Druckgießen sowie Umformen durch Strangpressen, Schmieden, Walzen, Streck- oder Tiefziehen eine wachsende Bedeutung zu. Mit diesen Verfahren lassen sich Leichtbauteile herstellen, für die insbesondere im Fahrzeugbau wachsender Bedarf besteht.

Zum Stand der Technik gehören Legierungen mit vorteilhaften mechanischen Eigenschaften, insbesondere mit hoher Zugfestigkeit.

Bekannt ist aus der DE 806 055 eine Magnesiumlegierung, die durch eine Zusammensetzung von 0,5 bis 10 % Metalle der Gruppe Seltenerden, Rest Magnesium mit der Maßgabe, daß die Seltenerden sich wenigstens zu 50 %, vorzugsweise wenigstens zu 75 % aus Neodym, höchstens bis zu 25 % aus Lanthan und Cer getrennt oder zusammen und aus Praseodym und kleinen Mengen Samarium und Spuren der Elemente der Yttriumgruppe als Rest zusammensetzen, wobei eins oder mehrere der nachfolgenden Elemente Mangan, Aluminium, Calzium, Thorium, Quecksilber, Beryllium, Zink, Kadmium und Zirkon zugesetzt werden.

Aus der DE 42 08 504 A1 ist eine Magnesiumlegierung bekannt, die 2 bis 8 % Seltenerdmetalle enthält, wobei das Seltenerdmetall aus Samarium besteht.

Weitere bekannte Magnesiumlegierungen mit vorteilhaften mechanischen Eigenschaften umfassen Legierungen, welche Zink und Mischungen von Metallen Seltener Erden enthalten, die einen hohen Anteil an Cer aufweisen. Eine solche Legierung enthält etwa 4,5 Gew% Zink und etwa 1,0 Gew% Seltener Erden, welche einen hohen Anteil Cer aufweisen. Diese Legierungen können gute mechanische Eigenschaften erreichen, sind jedoch schlecht gießbar, so daß es schwierig ist, Teile von zufriedenstellender Qualität zu gießen. Bei komplizierten zusammengesetzten Teilen kann das Schweißen auf Schwierigkeiten stoßen.

Legierungen mit verbesserter Gießbarkeit können durch höhere Zusätze an Zink und Seltenen Erden erhalten werden. Diese neigen aber dazu, spröde zu sein. Dies kann durch eine hydrierende Behandlung vermieden werden, was aber die Herstellung verteuert.

Magnesiumlegierungen mit höherem Gehalt an Komponenten anderer Metalle, wie z.B. Aluminium und Zink, die an sich feinkörnig erstarren, liegen bezüglich ihrer Korrosionseigenschaften wesentlich schlechter als reines Magnesium oder Magnesium-Mangan-Legierungen.

Aus der DE 1 433 108 A1 ist eine siliciumhaltige, korrosionsbeständige Magnesiumlegierung mit feinkörnigen Erstarrungsgefüge bekannt. Neben Silicium sind der Magnesiumlegierung Mangan, Zink, Titan und als weitere Legierungskomponenten Aluminium, Kadmium und Silber zugesetzt.

Weitere Legierungen, die neben dem Hauptbestandteil Magnesium, Mangan und weitere Elemente wie Aluminium, Kupfer, Eisen, Nickel, Calzium u. a. enthalten, sind beispielsweise aus den DE 199 15 276 A1, DE 196 38 764 A1, DE 679 156, DE 697 04 801 T2, DE 44 46 898 A1 bekannt.

Die bekannten Magnesiumlegierungen weisen die unterschiedlichsten Nachteile auf.

Die US 6 544 357 offenbart eine Magnesium- und Aluminiumlegierung, die 0,1 oder 0,2 Gewichts% bis zu 30 oder 40 Gewichts% La, Ce, Pr, Nd, Sm, Ti, V, Cr, Mu, Zr, Nb, Mo, Hf, Ta, W, Al, Ga, Si, B, Be, Ge, und Sb, nebst anderen Elementen, enthalten. Die Bandbreite der Legierungen, die hier möglicherweise hergestellt werden könnten, ist so breitgefächert und unüberschaubar, dass es für einen Fachmann unmöglich ist, bei der Legierung die im nachfolgenden beansprucht wird, anzugelangen.

Bei Anwesenheit von Calzium können Warmrisse nach dem Gießen in einem Gußverfahren mit hoher Abkühlgeschwindigkeit, beispielsweise beim Spritzguß, entstehen. Bei Legierungen, die Magnesium-Aluminium-Zink-Mangan- bzw. Magnesium-Aluminium-Mangan enthalten, vermindert sich die Festigkeit bei höheren Temperaturen.

Insgesamt verschlechtert sich das Umformverhalten, die Schweißbarkeit oder die Korrosionsbeständigkeit.

SMOLA B ETAL (Structural aspects of high performance Mg alloy design, Bd. A 324, 1. Januar 2002, Seite 113 -117) beschreiben Magnesiumlegierungen des Typs Mg-Sc-Ce-Mn. Die vorgenannten Legierungen weisen einen hohen Scandiumgehalt von 1 Gew% bis 15 Gew% und einen geringen Mangangehalt von 1 Gew% auf. Zum einen sind diese Legierungen aufgrund der hohen Scandiumgehalte relativ teuer in der Herstellung und weisen zum anderen aufgrund des geringen Mangangehaltes eine schlechtere Korrosionsbeständigkeit auf.

Die DE 10 2009 038 449 A1 beschreibt eine Magnesiumlegierung mit der Zusammensetzung 1,5 bis 2,2 Mangan (Mn), 0,5 bis 2,0 Gew.% Cer (Ce), 0,2 bis 2,0 Gew% Lanthan (La) und den auf 100 Gew% verbleibenden Rest Magnesium (Mg) sowie herstellungsbedingte Verunreinigungen.

Die Kaltverformbarkeit der gebräuchlichsten Magnesiumlegierungen ist aufgrund der hexagonalen Kristallstruktur und der geringen Duktilität begrenzt. Die meisten Magnesiumlegierungen verhalten sich bei Raumtemperatur spröde. Für bestimmte Umformverfahren zur Herstellung von Halbzeugen aus Magnesiumlegierungen ist neben einer hohen Zugfestigkeit ein duktiles Verhalten notwendig. Durch eine höhere Duktilität ist ein verbessertes Umform- und Deformationsverhalten möglich, gegebenenfalls auch eine höhere Festigkeit und Zähigkeit.

Viele der bekannten Magnesiumlegierungen weisen mit dem Herstellzustand stark variierende Eigenschaften auf.

Aufgabe der Erfindung ist es, eine Magnesiumlegierung zu entwickeln, die für die Herstellung von Blechen, Schweißdraht, Strangpreß- und/oder Druckgußprofilen bzw. - bauteilen geeignet ist, das heißt, die gute Verformungseigenschaften, eine hohe

Aufgabe der Erfindung ist es, eine Magnesiumlegierung zu entwickeln, die für die Herstellung von Blechen, Schweißdraht, Strangpreß- und/oder Druckgußprofilen bzw. -bauteilen geeignet ist, das heißt, die gute Verformungseigenschaften, eine hohe Korrosionsbeständigkeit, verbesserte Schweißbarkeit, hohe Streckgrenze sowie eine gute Kaltumformbarkeit besitzt.

Erfindungsgemäß wird dies durch eine Magnesiumlegierung der Zusammensetzung

| | |
|---|---|
| Mangan | 1,4 bis 2,2 |
| Cer | 0,4 bis 4,0 |
| Lanthan | 0,2 bis 2,0 |
| Scandium | 0,0001 bis 5 |

erreicht, wobei sich die Angaben auf Gewichtsprozent, Gew%, an der Legierung beziehen und Magnesium sowie herstellungsbedingte Verunreinigungen den auf 100 Gew% verbleibenden Restanteil an der Legierung einnehmen und das Verhältnis von Cer zu Lanthan 2 : 1 beträgt.

Die Magnesiumlegierung weist eine Streckgrenze Rp 0,2 von mindestens 120 Mpa auf sowie gute Festigkeitseigenschaften über einen größeren Temperaturbereich und einen hohen Kriechwiderstand, bei einer ausreichenden Verformbarkeit.

Die erfindungsgemäße Magnesiumlegierung kann Anwendung finden, für die Herstellung von Blechen, Halbzeugen oder Strangpreß- und/oder Druckgußteilen und - profilen sowie zur Herstellung von gezogenen Schweißdrähten. Daraus können dann spezielle Teile, vorzugsweise für die Anwendung im Fahrzeugbau, Zugbau, Schiffbau und Flugzeugbau, wie Sitz-, Fenster- oder Türrahmen, Fahrzeugaußenhäute, Gehäuse, Träger, Halterungen, Stützen und andere Kleinteile hergestellt werden.

Eine besonders vorteilhafte Zusammensetzung der erfindungsgemäßen Magnesiumlegierung ergibt sich, wenn diese aus den Bestandteilen 97,15 Gew% aluminiumfreien Magnesium, 1,8 Gew% Mangan, 0,6 Gew% Cer, 0,3 Gew% Lanthan und 0,15 Gew% Scandium hergestellt wird.

Die Legierung mit dieser Zusammensetzung zeichnet sich durch eine gute Korrosionsbeständigkeit, ein verbessertes Kaltumformverhalten, ein geringeres Warmkriechverhalten sowie durch eine hohe Streckgrenze aus. Durch den Zusatz von Scandium zeigen sich gefügestabilisierende und korngrößenfeinende Effekte.

Diese Magnesiumlegierung kann insbesondere für die Herstellung von Blechen, von Strangpreß- und/oder Druckgußprofilen bzw. -bauteilen sowie für gezogene Schweißdrähte verwendet werden.

## Patentansprüche

1. Aluminiumfreie Magnesiumlegierung der Zusammensetzung
| | |
|---|---|
| Mangan | 1,4 bis 2,2 |
| Cer | 0,4 bis 4,0 |
| Lanthan | 0,2 bis 2,0, |
| Scandium | 0,0001 bis 5 |
wobei sich die Angaben auf Gewichtsprozent, Gew%, an der Legierung beziehen und Magnesium sowie herstellungsbedingte Verunreinigungen den auf 100 Gew% verbleibenden Restanteil an der Legierung einnehmen und das Verhältnis von Cer zu Lanthan 2 : 1 beträgt.

2. Aluminiumfreie Magnesiumlegierung nach Anspruch 1, umfassend 1,8Gew% Mangan, 0,6 Gew% Cer, 0,3 Gew% Lanthan, 0,15 Gew% Scandium und 97,15 Gew.% aluminiumfreies Magnesium.

3. Verwendung der Legierung nach Anspruch 1 und 2 zur Herstellung von Strangpreß- und/oder Druckgußprofilen.

4. Verwendung der Legierung nach Anspruch 1 und 2 zur Herstellung von gezogenen Schweißdrähten.

## Claims

1. Aluminium-free magnesium alloy of composition
| | |
|---|---|
| Manganese | 1.4 to 2.2 |
| Cerium | 0.4 to 4.0 |
| Lanthanum | 0.2 to 2.0 |
| Scandium | 0.0001 to 5 |
wherein the information relates to weight percent (wt%) of the alloy and magnesium as well as production-related impurities occupy the remaining proportion to 100 wt% of the alloy and the ratio of cerium to lanthanum is 2 : 1.

2. An aluminium-free magnesium alloy according to claim 1, wherein the alloy comprises 1.8 wt% manganese, 0.6 wt% cerium, 0.3 wt% lanthanum, 0.15 wt% scandium and 97.15 wt% aluminium-free magnesium.

3. Use of the alloy according to claims 1 and 2 for the production of extruded and/or die-cast profiles.

4. Use of the alloy according to claims 1 and 2 for the production of drawn welding wires.

## Revendications

1. Alliage de magnésium exempt d'aluminium constitué d'une composition
| | |
|---|---|
| Manganèse | 1,4 à 2,2 |
| Cérium | 0,4 à 4,0 |
| Lanthane | 0,2 à 2,0 |
| Scandium | 0,0001 à 5 |
la part restante de l'alliage pour atteindre 100 pourcent en poids (% en poids) étant composée de magnésium ainsi que d'impuretés de fabrication, et le rapport cérium : lanthane étant de 2 : 1.

2. Alliage de magnésium exempt d'aluminium selon la revendication 1, constitué d'une composition comprenant 1,8 % en poids de manganèse, 0,6 % en poids de cérium, 0,3 % en poids de lanthane, 0,15 % en poids de scandium et 97,15 % en poids de magnésium exempt d'aluminium

3. Utilisation de l'alliage selon les revendications 1 et 2 pour la fabrication de profilés extrudés et/ou moulés sous pression.

4. Utilisation de l'alliage selon les revendications 1 et 2 pour la fabrication de fils de soudage étirés.
